# EUROPEAN PATENT SPECIFICATION

(11) **EP 4 565 992 B1**
(45) Date of publication and mention of the grant of the patent: **29.07.2026**
(21) Application number: 22757683.2
(22) Date of filing: 05.08.2022
(51) Int. Cl.: G06K 7/10

(54) **RFID TUNNEL READER**
RFID-TUNNELLESER
LECTEUR TUNNEL RFID

(43) Date of publication of application: 11.06.2025
(73) Proprietor: SATO Corporation, Tokyo 108-0023 (JP)
(72) Inventor: ANTONIO, Steven, St Peters, New South Wales 2044 (AU)
(74) Representative: Grünecker Patent- und Rechtsanwälte PartG mbB
(86) International application number: PCT/IB2022/057288
(87) International publication number: WO 2024/028645

(56) References cited:
- EP-B1- 1 064 568
- DE-A1- 102012 111 986
- JP-B2- 6 135 358
- US-A1- 2006 113 369
- US-A1- 2021 242 563

## Description

### Technical Field

The present disclosure broadly relates to RFID readers and, more particularly, to a portable RFID tunnel reader.

### Background

Radio-frequency identification (RFID) is a wireless identification method where data is electronically stored on a tag, and the data is readable by an RFID reader in order to identify, locate, and/or track the tagged items.

One example where RFID tags are used to label items is in healthcare, where RFID tags may be used for inventory tracking of various items ranging from medication to blood bags. Where many labelled items are stacked together, bulk reading of the RFID tags is required.

One type of RFID reader that can be used for bulk reading is a tunnel reader. Tunnel readers include a tunnel through which tagged items move, for example on a conveyer belt, while the tunnel reader scans the area inside the tunnel in order to detect RFID tags. Tunnel readers are known from EP 1 064 568 B1 and DE 10 2012 111986 A1.

Telescopic RFID interrogator antennas are known from US 2021 / 0 242 563 (see Fig. 3 and 4) and US 2006 / 0 113 369 (see Fig. 6), but not in the context of a tunnel reader, so that these do not receive any labels.

The advantage provided by tunnel readers is that bulk reading can be performed, for example where boxes with multiple tagged items can move through the tunnel and all the item tags can easily be read. However, tunnel readers are large and bulky, and they are also expensive due to the size and complexity of the tunnel antenna and associated electronics.

For some applications, for example tracking orthopaedic implants in transport boxes held as consignment stock at hospitals, tunnel readers are too expensive and too large. Consequently the use of tunnel readers is not feasible, either for widescale deployment across many hospitals, or for reading a relatively small number of consignment items (e.g. a few hundred or less).
From JP 6 135358 B2 an RFID reader is known which comprises an antenna with a plurality of antenna sections which are movably connected to one another.

Any discussion of documents, acts, materials, devices, articles or the like which has been included in the present specification is not to be taken as an admission that any or all of these matters form part of the prior art base or were common general knowledge in the field relevant to the present disclosure as it existed before the priority date of each claim of this application.

### Summary

To date the use of tunnel readers for a relatively small number of items (e.g. a few hundred or less), and for widescale deployment across multiple locations, has not been practical due to the cost and bulk of such machines. However, it would be useful to be able to use a tunnel reader that is less expensive and less bulky in order to scan multiple tagged items at the same time.

This is achieved for a portable RFID tunnel reader by the features of claim 1.

The two or more antenna sections may comprise metal antenna plates, wherein the metal antenna plates are foldably connected to one another so that the body is foldable.

The hollow tube body may have a cuboid shape and comprise four or more sections, each section hingedly attached to two adjacent sections. Two opposite sides of the hollow tube body may comprise two sections that fold inward to collapse the body.

The antenna may be movably attached to the electronic reader so that the antenna is collapsible toward the electronic reader.

The RFID tunnel reader may be configurable to be in either an expanded configuration or a collapsed configuration. The RFID tunnel reader may be portable in the collapsed configuration.

The collapsible antenna may comprise at least one current feed point and at least one current return point, the feed and return points electrically connected to the antenna body so that a current flowing through the antenna body generates a magnetic field within the read region for reading RFID tags.

The antenna body may comprise an electric break so that the at least one current feed point provides current to the antenna body on a first side of the electric break, and the at least one current return point provides a current return path on a second opposite side of the break. The electric break may comprise a dielectric gap in the antenna body.

These and other aspects and features will now become apparent to those skilled in the art upon review of the following description of specific non-limiting embodiments in conjunction with the accompanying drawings.

### Brief Description of the Drawings

The detailed description of illustrative (non-limiting) embodiments will be more fully appreciated when taken in conjunction with the accompanying drawings in which:

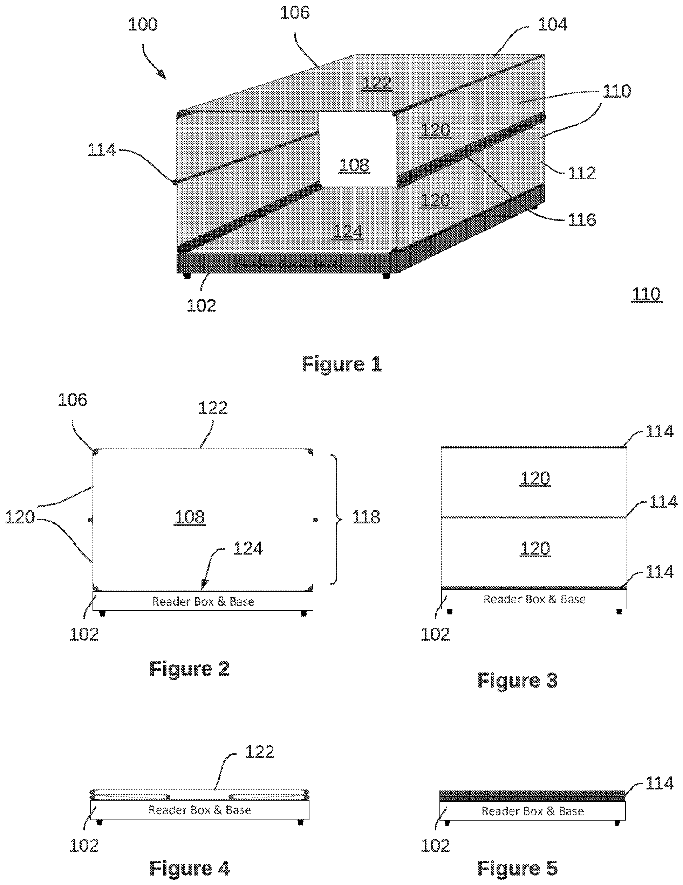

Figure 1 is a perspective view of an embodiment of a portable RFID tunnel reader in an expanded configuration;
Figure 2 is a front view of the RFID tunnel reader of Figure 1 in the expanded configuration;
Figure 3 is a side view of the RFID tunnel reader of Figure 1 in the expanded configuration;
Figure 4 is a front view of the RFID tunnel reader of Figure 1 in a collapsed configuration;
Figure 5 is a side view of the RFID tunnel reader of Figure 1 in the collapsed configuration.

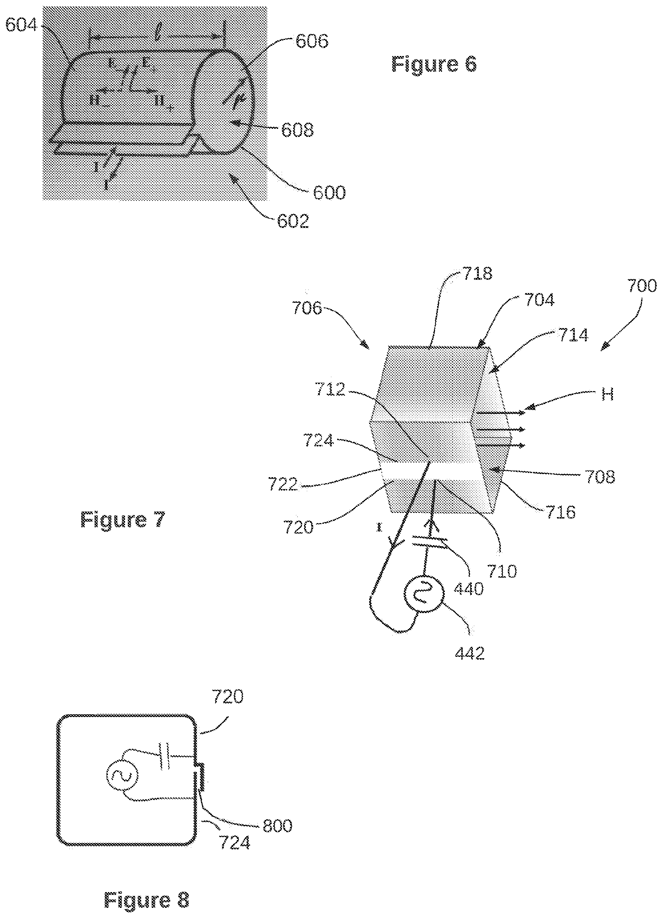

Figure 6 is a schematic representation of a cylindrical embodiment of an RFID antenna.
Figure 7 is a schematic representation of a cuboid embodiment of an RFID antenna.
Figure 8 is a schematic representation of another cuboid embodiment of an RFID antenna.

In the drawings, like reference numerals designate similar parts.

The drawings are not necessarily to scale and may be illustrated by phantom lines, diagrammatic representations and fragmentary views. In certain instances, details that are not necessary for an understanding of the embodiments or that render other details difficult to perceive may have been omitted.

### Detailed Description

Reference will now be made in detail to various non-limiting embodiments of RFID readers. It should be understood that other non-limiting embodiment(s), modifications and equivalents will be evident to one of ordinary skill in the art in view of the non-limiting embodiment(s) disclosed herein

Furthermore, it will be recognized by one of ordinary skill in the art that certain structural and operational details of the non-limiting embodiment(s) discussed hereafter may be modified or omitted (i.e. non-essential) altogether. In other instances, well known methods, procedures, and components have not been described in detail.

**Figure 1** of the drawings shows a portable RFID tunnel reader 100 comprising an electronic reader 102 configured to read a plurality of electronic labels, and a collapsible antenna 104 in communication with the electronic reader 102. The antenna 100 comprises a hollow tube body 106 defining an antenna read region 108 for receiving the plurality of electronic labels. The body 106 comprises two or more antenna sections 110. In some embodiments the sections may be in the form of curved and/or flat panels. The antenna sections 110 are movably connected to one another so that the body 106 is collapsible. A front view of the read region 108 is shown in **Figure 2** of the drawings (in this embodiment with a rectangular cross-section), which illustrates the RFID tunnel reader in the expanded configuration

In the non-limiting embodiment illustrated in the figures, the two or more antenna sections 110 comprise metal antenna plates 112, and the metal antenna plates 112 are foldably connected to one another so that the body 106 is foldable.

The hollow tube body may have a cuboid shape and comprise four or more sections, each section hingedly attached to two adjacent sections. In the illustrated embodiment, the tube body of the antenna 104 is in the shape of an open-ended square or rectangular box so that the tube body 106 has a quadrilateral (e.g. rectangular) cross section. In this embodiment the antenna box is configured to be lying on its side so that a box of items can be placed inside it from the side. In other embodiments, the antenna box may be configured to be placed upright, so that a box of items can be placed inside it from the top. The antenna is movably attached to the electronic reader so that the antenna is collapsible toward the electronic reader, for example via hinges connecting sections of the antenna, and/or via hinges attaching the antenna to the reader.

In other embodiments the tube body 106 may include more or less antenna sections than the six pictured in Figure 1, and the sections may be shaped and sized to form a tube configuration having a non-rectangular cross section, for example a triangular cross section, a circle, a hexagon, etc.

The RFID tunnel reader is configurable to be in either an expanded configuration or a collapsed configuration. The RFID tunnel reader is easily portable in the collapsed configuration. The antenna sections 110 are movably connected to one another so that the body 106 is collapsible. The antenna is configured to be collapsible so that it can fold down flat and compact, or at least smaller than in the operational expanded configuration. The antenna sections 110 are movably connected together via section connecting means 114.

In the illustrated embodiment the antenna sections 110 comprise metal antenna plates 112 that are hingedly connected together along adjacent edges of each plate 112. In this embodiment the section connecting means 114 include one or more hinges 116 extending along the length of abutting edges of adjacent plates. The hinges are conductive (or include conductive parts), for example including metal, so that the antenna 104 has an uninterrupted conductive path around the metallic tube body 106.

Two opposite sides of the hollow tube body 106 may comprise two sections that fold inward to collapse the body. In the illustrated embodiment the two side panels 118 are each divided into two sub-panels 120 which are also hingedly attached to one another. **Figure 3** of the drawings shows a side view of the RFID tunnel reader in the expanded configuration, and the two sub-panels 120 and connecting means 114 can be seen. The sub-panels fold inward when the top panel 122 is moved towards the base panel 124 in the collapsed configuration, as illustrated in **Figure 4** of the drawings. **Figure 5** of the drawings shows a side view of the RFID tunnel reader 100 in the collapsed configuration. In alternate arrangements the sub-panels may fold outward.

In alternative embodiments, one or more hinges may connect adjacent sections, such hinges not extending along the entire length of each adjacent plate edge. For example, one hinge (shorter than the length of the section edge) may be provided approximately in the middle of adjacent plate section edges, or two hinges may be provided one on either side of the boundary between two sections. In alternative embodiments the antenna sections 110 are movably connected by other means, for example by resilient members such as one or more rubber strips affixed to and thereby connecting adjacent antenna sections 110. Such connecting strips may include conductive portions, for example metal filaments.

In alternative embodiments the antenna sections may not be flat or planar, but may include a curved surface. For example, the antenna body may have an oval shape comprised of two or more antenna sections. In some embodiments, the section connecting means (e.g. the hinges) may comprise one or more releasable connectors, such as a detachable joint, so that two adjacent sections are releasably connected. In this way it is possible to separate two such adjacent sections when the antenna body is collapsed; in some embodiments (for example where the sections include one or more curved components), a releasable connector may allow a more compact collapsed configuration.

In alternative embodiments the antenna sections may be configured to form a telescopic antenna body so that the sections form concentric tubular sections that are retractable so that they slide into one another when the antenna is collapsed. The sections may be any suitable shape, for example cylindrical or cuboid. In other embodiments the body may be collapsible in a concertina configuration, by using a flexible conductive material and/or by using a plurality of hingedly attached sections.

The antenna sections are made of an electroconductive material, for example metal. The sections may be made to be light and cost-effective, for example by using thin metal plates. With such thin and light plates forming the antenna, when collapsed the tunnel reader need be no larger than, for example, a container such as the footprint of a transport or storage box containing tagged items. With thin antenna plates, the collapsed configuration of the antenna may have a thickness of 5-10mm (for the illustrated embodiment, as can be seen in Figure 4, this includes four layers of stacked antenna plates).

In the collapsed configuration, the tunnel reader is easily portable. In some configurations the portable RFID tunnel reader may also include a handle, for example a handle connected to the electronic reader box and base. The RFID runnel reader can then be carried like a suitcase by its handle.

The RFID antenna is configured to read tags placed inside the read region 108 in an orientation that is substantially perpendicular to the sections 110 that make up the tube body 106 of the tunnel reader. For the tunnel reader to detect an electronic tag, magnetic coupling occurs between the RFID tunnel reader's antenna 104, and a coil antenna that forms part of the electronic tag. Where the tag orientation is known, for example where tagged items are packed in a specified orientation inside a container, then the container is placed inside the read region 108 with an orientation that will enable coupling between the reader antenna and the coil antennas. For this scenario with a single known tag orientation, a single read is required by the tunnel reader. Alternatively, if items are placed in a container with random orientations, then (for a cuboid container) a user places the container in the reader three times and the reader is configured to read the contents of the container three times in order to detect tags with any orientation.

The electronic reader 102 includes a power supply and other electronics as required for RFID readers. In some embodiments the electronic reader 102 includes a user interface configured to display the read results to the user and/or to input settings or user configurations. Where multiple reads are required (e.g. for random tag orientations), the user is able to specify a multiple read configuration that combines the read results of multiple scans. In this way three-dimensional (3D) reading is possible when one or more tagged items are placed in the tunnel reader in more than one orientation.

The RFID antenna 100 has an antenna body 106 that has a continuous conducting surface including the section connecting means 114. The antenna body 106 is shaped to define an antenna volume for receiving one or more RFID tagged items, the antenna volume comprises the antenna read region 108. The antenna body 106 is shaped to form a hollow prism, for example a hollow cuboid. The hollow prism can have any hollow cross-sectional shape, where the internal volume is used to hold items. The hollow prism has one or more walls with surface area, so that the hollow prism may be, for example, a hollow cylinder 600 as illustrated in Figure 6 of the drawings, or may be a hollow polyhedral prism.

Referring to **Figure 6****,** the antenna body forms a single turn solenoid 602 with an air core. Currents flowing on the conductive surface 604 of the antenna body 606 form a current sheet which generates electromagnetic waves that propagate radially inwards and outwards from the two surfaces of the sheet. The inwards travelling wave sets up a standing wave inside the antenna volume 608, creating a uniformly distributed magnetic field, H.

In the embodiment where the antenna body 606 is in the form of the hollow cylinder 600 illustrated in Figure 6, the inductance L of the solenoid 602 is given by L = µ0 A/l, where µ0 is permeability of free space equal to 4π10-7, A is the area of the loop given by π r2, and l is the length of the cylinder 600 (i.e. the longitudinal dimension perpendicular to the general direction of current flow).

Referring to **Figure 7** of the drawings, an RFID antenna system 700 for reading a plurality of RFID tags has an RFID antenna 704. The RFID antenna 704 comprises an antenna body 706 formed by an electroconductive surface. The RFID antenna 704 includes an electric gap 708 in the electroconductive surface, and at least one current feed point 710 and at least one current return point 712 on either side of the electric gap 708. The antenna body 706 is shaped to form a single turn solenoid defining an antenna volume 714 for holding RFID tagged items. The electroconductive surface is shaped and positioned on two of three dimensions, shown in Figure 7 as side walls and a top and a bottom with open ends, so that the internal magnetic field can pass from the inside to the outside of the antenna body 706 to create the magnetic return path.

For the hollow (rectangular) cuboid 716 that forms the body 706 of the antenna 704, the area A is the width W multiplied by the depth D of the antenna body 706. The inductance of the rectangular solenoid 718 is given by L = µ0 D W / l. The internal magnetic field H is aligned along the axis of the solenoid 718 in the direction of the longitudinal dimension perpendicular to the general direction of current flow, and is given by Amperes Law: H = I / l, where I is the total current flowing in the solenoid sheet.

An RFID antenna is a conductive structure with terminals that connect to an RFID reader. The RFID reader controls operation of the RFID antenna (for example via an antenna controller), and receives information about RFID tags from the RFID antenna. The RFID reader provides a signal source to the RFID antenna to activate the RFID antenna in order to interrogate RFID tags.

Referring again to Figure 7 of the drawings, the antenna 704 is substantially square in cross section. The terminals of the RFID antenna 704 are a current feed point 710 and a current return point 712. The feed and return points 710, 712 are electrically connected to the antenna body 706 so that a current flowing through the antenna body 706 generates a magnetic field H within the antenna volume 714 for reading RFID tags.

The antenna body 706 has an electric break 722 so that the current feed point 710 provides current to the antenna body 706 on a first side 720 of the electric break 722, and the current return point 712 provides a current return path on a second opposite side 724 of the break 722. The electric break is formed by a longitudinal gap 708 in the antenna body, with air or another dielectric separating the two sides 720, 724 so that current can be applied to the antenna 704. The gap 708 may be small (for example 1mm or less), provided that there is no electrical connection to short circuit the signal source applied across the gap. The gap may be larger (for example 5-20mm), however if the gap is too large (for example a separation of more than 20mm between the first side 720 of the electric break 722 and the second opposite side 724) then the magnetic field inside the antenna volume 714 may be compromised as the magnetic field H leaks out through the gap.

In some embodiments, the electric break 722 is in the form of a longitudinal gap 708. The smaller the gap 708 is, the less magnetic field leakage occurs. Leakage through the electric break 722 can be reduced or even eliminated by adjusting the form of longitudinal gap 708 such that there is an overlap of the two side 720 and 724 as shown in cross section in **Figure 8****.** Where there is sufficient overlap, the magnetic field is forced to run parallel to the liner surface and cannot pass through the gap 708. An overlap width of five to twenty times (for example about ten times) the gap width results in a suitable containment for the magnetic field lines. For example, if the first side 720 overlaps the second side 724 with 10mm, and there is a 1mm separation 800 between the first side 720 and the second side 724 will, then there will be very little or substantially no leakage of the magnetic field from the gap. The method of implementing an overlap to prevent magnetic field leakage is described in WO 2016 038897.

In some embodiments the non-conductive "gap" may be provided by a non-conductive section connecting means 114. In other embodiments a gap may be provided in the base panel 124, or along a section connecting means of the base panel. An electrical break along a panel, or between two panels, that are positioned close to or adjacent the electronic reader 102 provides the advantage of being close to the reader 102 so that the electrical connection between the antenna and the reader is simple.

The portable RFID tunnel reader described herein has several advantages. The reader is able to quickly read the contents of containers such as transport or storage boxes without decanting the items in the box (i.e. opening the box). Several items can be read at once, even hundreds of items. If the box needs to be opened and the items decanted, then there is no advantage in using RFID over a normal barcode scanning system. However, where the items can be scanned with an RFID reader, reading is faster and more efficient than using a barcode scanner.

In the portable RFID tunnel reader the read range of the reader extends across the full length of the container placed in the read region108. This is not possible for flat 3D shelving style antennas but simple and easy for tunnel type antennas.

A portable reader can be carried by the user (for example by an orthopaedic company sales representative who regularly visits the hospital), and can be used to quickly count or check items (for example to check consignment stock).

Because of the ease of use, containers or items can easily be rotated within the read region of the antenna. In this way 3D tag reading is possible even when only one tag is used per item (i.e. one tag in one orientation). Furthermore, the tunnel reader can be used to scan single or loose items, as well as packaged items in containers such as boxes.

The portable RFID tunnel reader has a cost-effective design, and is robust and easily carried in the collapsed configuration.

## Claims

1. A portable RFID tunnel reader (100) comprising:
an electronic reader (102) configured to read a plurality of electronic labels;
an antenna (104) in communication with the electronic reader (102), the antenna comprising:
a hollow tube antenna body (106) defining an antenna read region (108) for receiving the plurality of electronic labels,
**characterized in that**
the antenna body comprises two or more antenna sections (110), the antenna sections being movably connected to one another so that the antenna body is collapsible.

2. The portable RFID tunnel reader of claim 1, wherein the two or more antenna sections comprise metal antenna plates (112), and wherein the metal antenna plates are foldably connected to one another so that the antenna body is foldable.

3. The portable RFID tunnel reader of claim 1 or claim 2, wherein the hollow tube antenna body has a cuboid shape and comprises four or more sections, each section being hingedly attached to two adjacent sections.

4. The portable RFID tunnel reader of claim 3, wherein two opposite sides of the hollow tube antenna body comprise two sections that fold inward to collapse the antenna body.

5. The portable RFID tunnel reader of any one of the preceding claims, wherein the antenna is movably attached to the electronic reader so that the antenna is collapsible toward the electronic reader.

6. The portable RFID tunnel reader of any one of the preceding claims, wherein the RFID tunnel reader is configurable to be in either an expanded configuration or a collapsed configuration.

7. The portable RFID tunnel reader of claim 6, wherein the RFID tunnel reader is portable in the collapsed configuration.

8. The portable RFID tunnel reader of any one of the preceding claims,
wherein the collapsible antenna comprises at least one current feed point and at least one current return point, the feed and return points being electrically connected to the antenna body so that a current flowing through the antenna body generates a magnetic field within the read region for reading RFID tags,
wherein the antenna body comprises an electric break so that the at least one current feed point provides current to the antenna body on a first side of the electric break, and the at least one current return point provides a current return path on a second opposite side of the break, and
wherein the electric break comprises a dielectric gap in the antenna body.

## Patentansprüche

1. Tragbares RFID-Tunnel-Lesegerät (100), das umfasst:
eine elektronische Leseeinrichtung (102), die zum Lesen einer Vielzahl elektronischer Etiketten ausgeführt ist;
eine Antenne (104), die in Kommunikationsverbindung mit der elektronischen Leseeinrichtung (102) ist, wobei die Antenne umfasst:
einen hohlen Röhren-Antennenkörper (106), der einen Antennen-Lesebereich (108) zum Aufnehmen der Vielzahl elektronischer Etiketten bildet,
**dadurch gekennzeichnet, dass**
der Antennenkörper zwei oder mehr Antennen-Teilabschnitte (110) umfasst, wobei die Antennen-Teilabschnitte beweglich so miteinander verbunden sind, dass der Antennenkörper zusammengeklappt werden kann.

2. Tragbares RFID-Tunnel-Lesegerät nach Anspruch 1, wobei die zwei oder mehr Antennen-Teilabschnitte Antennenplatten (112) aus Metall umfassen, und wobei die Antennenplatten aus Metall einklappbar miteinander verbunden sind, so dass der Antennenkörper zusammengeklappt werden kann.

3. Tragbares RFID-Tunnel-Lesegerät nach Anspruch 1 oder Anspruch 2, wobei der hohle Röhren-Antennenkörper eine Quaderform hat und vier oder mehr Teilabschnitte umfasst und jeder Teilabschnitt gelenkig an zwei benachbarten Teilabschnitten angebracht ist.

4. Tragbares RFID-Tunnel-Lesegerät nach Anspruch 3, wobei zwei gegenüberliegende Seiten des hohlen Röhren-Antennenkörpers zwei Teilabschnitte umfassen, die nach innen geklappt werden, um den Antennenkörper zusammenzuklappen.

5. Tragbares RFID-Tunnel-Lesegerät nach einem der vorangehenden Ansprüche, wobei die Antenne beweglich so an der elektronischen Leseeinrichtung angebracht ist, dass die Antenne auf die elektronische Leseeinrichtung zu geklappt werden kann.

6. Tragbares RFID-Tunnel-Lesegerät nach einem der vorangehenden Ansprüche, wobei das RFID-Tunnel-Lesegerät so konfiguriert werden kann, dass es sich entweder in einem aufgeklappten oder einem zusammengeklappten Zustand befindet.

7. Tragbares RFID-Tunnel-Lesegerät nach Anspruch 6, wobei das RFID-Tunnel-Lesegerät in dem zusammengeklappten Zustand getragen werden kann.

8. Tragbares RFID-Tunnel-Lesegerät nach einem der vorangehenden Ansprüche, wobei die zusammenklappbare Antenne wenigstens einen Strom-Einspeisepunkt sowie wenigstens einen Strom-Rückleitpunkt umfasst und der Einspeise- sowie der Rückleitpunkt elektrisch so mit dem Antennenkörper verbunden sind, dass ein durch den Antennenkörper fließender Strom ein Magnetfeld im Inneren des Lesebereiches zum Lesen von RFID-Etiketten erzeugt,
wobei der Antennenkörper eine Stromunterbrechung umfasst, so dass der wenigstens eine Strom-Einspeisepunkt dem Antennenkörper an einer ersten Seite der Stromunterbrechung Strom zuführt, und der wenigstens eine Strom-Rückleitpunkt einen Strom-Rückleitweg an einer zweiten, gegenüberliegenden Seite der Unterbrechung bildet, und
wobei die Stromunterbrechung einen dielektrischen Spalt in dem Antennenkörper umfasst.

## Revendications

1. Lecteur RFID en tunnel portable (100) comprenant :
un lecteur électronique (102) configuré pour lire une pluralité d'étiquettes électroniques ;
une antenne (104) en communication avec le lecteur électronique (102), l'antenne comprenant :
un corps d'antenne tubulaire creux (106) définissant une région de lecture d'antenne (108) destinée à recevoir la pluralité d'étiquettes électroniques,
**caractérisé en ce que**
le corps d'antenne comprend deux sections d'antenne (110) ou plus, les sections d'antenne étant reliées les unes aux autres de manière mobile de sorte que le corps d'antenne est rétractable.

2. Lecteur RFID en tunnel portable selon la revendication 1, dans lequel les deux sections d'antenne ou plus comprennent des plaques d'antenne métalliques (112), et dans lequel les plaques d'antenne métalliques sont reliées les unes aux autres de manière pliable de sorte que le corps d'antenne est pliable.

3. Lecteur RFID en tunnel portable selon la revendication 1 ou la revendication 2, dans lequel le corps d'antenne tubulaire creux a une forme cuboïde et comprend quatre sections ou plus, chaque section étant fixée de manière articulée à deux sections adjacentes.

4. Lecteur RFID en tunnel portable selon la revendication 3, dans lequel deux côtés opposés du corps d'antenne tubulaire creux comprennent deux sections qui se replient vers l'intérieur pour rétracter le corps d'antenne.

5. Lecteur RFID en tunnel portable selon l'une quelconque des revendications précédentes, dans lequel l'antenne est fixée de manière mobile au lecteur électronique, de sorte que l'antenne est rétractable vers le lecteur électronique.

6. Lecteur RFID en tunnel portable selon l'une quelconque des revendications précédentes, dans lequel le lecteur RFID en tunnel est configurable pour être soit dans une configuration déployée, soit dans une configuration rétractée.

7. Lecteur RFID en tunnel portable selon la revendication 6, dans lequel le lecteur RFID en tunnel est portable dans la configuration rétractée.

8. Lecteur RFID en tunnel portable selon l'une quelconque des revendications précédentes,
dans lequel l'antenne rétractable comprend au moins un point d'alimentation en courant et au moins un point de retour de courant, les points d'alimentation et de retour étant reliés électriquement au corps d'antenne de sorte qu'un courant circulant à travers le corps d'antenne génère un champ magnétique dans la région de lecture pour lire des étiquettes RFID,
dans lequel le corps d'antenne comprend un élément de coupure électrique, de sorte que ledit au moins un point d'alimentation en courant fournit un courant au corps d'antenne sur un premier côté de l'élément de coupure électrique, et ledit au moins un point de retour de courant fournit un trajet de retour de courant sur un second côté opposé de l'élément de coupure, et
dans lequel l'élément de coupure électrique comprend un écart diélectrique dans le corps d'antenne.
